**Europäisches Patentamt**

**European Patent Office**

**Office européen des brevets**

(11) Numéro de publication: **0 323 930 A1**

# (12) DEMANDE DE BREVET EUROPEEN

(21) Numéro de dépôt: **89400022.3**

(22) Date de dépôt: **04.01.89**

(51) Int. Cl.⁴: **A 23 J 3/00**
**A 23 L 1/015**

(30) Priorité: **08.01.88 FR 8800123**

(43) Date de publication de la demande:
**12.07.89 Bulletin 89/28**

(84) Etats contractants désignés:
**AT BE CH DE ES FR GB GR IT LI LU NL SE**

(71) Demandeur: **BIOEUROPE**
**4 Impasse Didier Daurat Z.I. Montaudran**
**F-31400 Toulouse (FR)**

(72) Inventeur: **Thibault, Philippe André**
**58 rue Romain Rolland**
**F-31520 Ramonville-Saint-Agne (FR)**

**Monsan, Pierre Frédéric**
**Renoufail Mondonville**
**F-31700 Blagnac (FR)**

(74) Mandataire: **Colas, Jean-Pierre et al**
**Cabinet de Boisse 37, avenue Franklin D. Roosevelt**
**F-75008 Paris (FR)**

(54) **Procédé d'élimination de l'amertume d'hydrolysats de protéines et produit obtenu.**

(57) L'invention se rapporte aux biotechnologies.

Elle concerne un procédé pour éliminer l'amertume de peptides obtenus par hydrolyse de matières protéinées selon lequel on fait réagir une carboxypeptidase avec les peptides amers pendant un temps suffisant pour éliminer l'amertume de ceux-ci, caractérisé en ce qu'on utilise comme source de carboxypeptidase des parois ou écorces de la levure Saccharomyces cerevisiae ou une matière contenant de telles parois ou écorces ; et en ce que, finalement, on sépare lesdites parois ou écorces de levure des peptides débarrassés de leur amertume et on recueille ces derniers.

Application dans le domaine de la nutrition.

EP 0 323 930 A1

Description

## Procédé d'élimination de l'amertume d'hydrolysats de protéines et produit obtenu.

L'invention concerne un procédé d'élimination de l'amertume d'hydrolysats de protéines (peptides) et les produits débarrassés de leur goût amer ainsi obtenus.

Les protéines (d'origine végétale, animale ou microbienne) sont très utilisées dans les domaines alimentaires.

Il peut être avantageux de les soumettre à une hydrolyse partielle pour les convertir en peptides. On peut ainsi améliorer leur solubilité, renforcer certaines propriétés recherchées (pouvoir émulsifiant par exemple), supprimer des effets allergènes (production de laits maternisés) ou encore préparer des compositions prédigérées qui trouvent des applications dans le domaine de la nutrition thérapeutique, l'hydrolyse venant suppléer une déficience du système digestif.

L'hydrolyse peut être menée par voie chimique mais on assiste alors à une perte de digestibilité du produit obtenu due notamment à l'isomérisation des acides aminés libérés. Aussi, elle est souvent réalisée par voie enzymatique; les enzymes utilisées sont des protéases d'origine végétale (papaïne, bromélaïne), microbienne ou animale (pancréatine, trypsine, chymotrypsine).

Selon le type de protéase utilisée (c'est-à-dire son spectre de spécificité), le type de protéine que l'on veut hydrolyser et le degré d'hydrolyse, les préparations obtenues ont un goût amer plus ou moins prononcé. Il est connu, par exemple, que la caséine du lait, après hydrolyse enzymatique, est transformée en un produit peptidique d'une amertume très prononcée.

L'apparition d'un goût amer est souvent un obstacle à l'utilisation des hydrolysats de protéines et plusieurs procédés ont été proposés pour diminuer ou supprimer cette amertume.

## PROCEDES EXISTANTS

L'amertume des hydrolysats de protéines est liée à la présence d'un certain type de peptides présentant notamment une forte teneur en acides aminés de nature hydrophobe. Les procédés connus proposés pour éliminer l'amertume des hydrolysats sont basés soit sur l'extraction de peptides hydrophobes soit sur des transformations enzymatiques. On mentionne ci-après quelques exemples de procédés connus permettant de réduire ou éliminer l'amertume de préparation de peptides obtenus par hydrolyse de protéines :

. Chromatographie d'interactions hydrophobes:
Différents types de supports de nature hydrophobe ont été proposés pour retenir les peptides amers. Par exemple: EP-A-0 014 362 décrit l'emploi de broyats d'origine végétale.

. Extraction à l'aide de solvants organiques:
U.S.A-4 496 599 décrit un procédé consistant à créer système biphasique à l'aide d'un solvant organique et de la solution à débarrasser de son amertume, les peptides hydrophobes sont solubilisés préférentiellement dans la phase organique et extraits après séparation de celle-ci.

. Extraction à l'aide de charbon actif:
J P -A-59 159 792 décrit un tel procédé.

. Extraction à l'aide d'échangeur d'ions:
U S-A-4 130 555 décrit un tel procédé.

. Chromatographie d'affinité:
DE- A-3 045 910 enseigne d'utiliser des récepteurs de l'amertume extraits d'animaux et fixés sur des supports pour retenir les peptides amers.

. Synthèse de plastéines:
Les plastéines sont des structures protéiques obtenues par recombinaison enzymatique de peptides et font intervenir des réactions de synthèse (formation de liaisons peptidiques).

Lors de la synthèse de plastéines à partir d'un hydrolysat présentant de l'amertume, il peut y avoir disparition du goût amer. FUJIMAKI, M., YAMASHITA, M., ARAI, S., et KATO, H., Agric. Biol. Chem., 34, 1325 (1980) décrivent un procédé de ce genre.

. Emploi d'exopeptidases:
Les exopeptidases catalysent l'hydrolyse d'un acide aminé terminal, à partir d'un peptide. Selon que cette réaction s'effectue à partir de l'extrémité N-terminale ou C-terminale des peptides, les enzymes sont respectivement nommées amino-peptidases ou carboxypeptidases. Plusieurs procédés brevetés revendiquent l'utilisation de protéases, dans un premier temps, pour produire des peptides à partir de protéines, puis d'exopeptidases, dans un second temps, pour éliminer le goût amer des peptides formés (voir par exemple EP-A 0 233 560, J P -A-62 143 697, J P -A-73 001 188, et l'article de H. Umetsu, H., H. Matsuoka et E. Ichishima paru dans J. Agric. Food. Chem. 1983, 31, pages 50-53).

Des procédés connus sus-mentionnés, les procédés par transformation enzymatique sont plus intéressants que les procédés par extraction car ils n'entraînent pas de pertes de matière azotée, ce qui est un avantage économique. Il faut observer, cependant, que les divers procédés connus ayant recours à l'emploi d'exopeptidases ne se prêtent guère à une application à l'échelle industrielle car ils requièrent l'emploi d'exopeptidases purifiées dont le prix est très élevé.

Il existe donc un besoin pour un procédé qui permette d'éliminer l'amertume de peptides obtenus par hydrolyse de protéines et qui soit économique à mettre en oeuvre et de plus ne soulève pas de problèmes du point de vue de la toxicité des produits finis obtenus pour l'homme et les animaux.

La présente invention vise à satisfaire ce besoin.

Plus précisément, la présente invention concerne un procédé pour éliminer l'amertume de peptides obtenus par hydrolyse de matières protéinées selon lequel on fait réagir une carboxypeptidase avec les peptides amers pendant un temps suffisant pour éliminer l'amertume de ceux-ci, caractérisé en ce qu'on utilise, comme source de carboxypeptidase, des parois ou écorces de la levure Saccharomyces cerevisiae ou une matière contenant de telle parois ou écorces; et en ce que, finalement, on sépare lesdites parois ou écorces de levure des peptides débarrassés de leur amertume et on recueille ces derniers.

Les parois ou écorces de levures Saccharomyces cerevisiae (levures de boulangerie) contiennent des carboxypeptidases Y qui ont l'avantage de présenter un spectre de spécificité relativement large et de donner lieu à des vitesses d'hydrolyse élevées de l'acide aminé terminal notamment lorsque ce dernier est aromatique, ce qui est souvent le cas des peptides amers. Ces caractéristiques rendent les parois ou écorces de Saccharomyces cerevisiae aptes à éliminer l'amertume de peptides très divers, c'est-à-dire dérivant de protéines diverses, avec une grande efficacité.

Les parois ou écorces de levure Saccharomyces cerevisiae présentent, en outre, les avantages suivants:
- elles sont facilement disponibles dans le commerce et à bas prix étant donné qu'elles sont un sous-produit de la production industrielle d'extraits de levures de boulangerie,
- elles ne posent pas de problèmes en rapport avec la réglementation en matière de produits alimentaires étant donné que Saccharomyces cerevisiae est un additif alimentaire autorisé et largement employé dans le domaine agro-alimentaire,
- elles sont aisément séparables du milieu réactionnel par centrifugation ou par filtration,
- elles peuvent être utilisées aussi bien dans un processus discontinu en les mélangeant simplement aux peptides à traiter, que dans un processus continu en ayant, par exemple, recours à un réacteur muni d'une membrane de micro-filtration.

Les parois ou écorces de la levure Saccharomyces cerevisiae peuvent être utilisées dans le procédé de l'invention soit telles qu'elles sont disponibles dans le commerce, c'est-à-dire sous forme d'une crème, soit après les avoir incluses dans un gel approprié, tel qu'un gel d'alginate, sous forme de billes ou équivalents.

Les parois ou écorces de levure de Saccharomyces cerevisiae sont disponibles dans le commerce sous forme d'une crème à environ 10% de matières sèches et présentent une activité carboxypeptidasique qui varie habituellement entre 0,1 et 1 Unité pour 1 milligramme de matière sèche. L'activité carboxypeptidasique est basée sur l'absorption de la para-nitroaniline (PNA) de la lumière émise à 405 nm, la para-nitroaniline résultant de l'hydrolyse de la N-benzoyl-L-tyrosine-para-nitroaniline (BTPNA) catalysée par les carboxypeptidases.

Selon cette méthode, on met en contact une quantité connue de crème de parois de levures ou de billes d'alginate contenant les parois de levures avec une solution de BTPNA, puis on mesure au bout d'un temps donné, la densité optique à 405 nm d'un surnageant exempt de catalyseur.

L'Unité d'Activité Enzymatique (U) dans ce système de mesure est la quantité d'enzyme qui catalyse l'hydrolyse d'une nanomole de BTPNA par minute, à 37°C, pH 7,6.

Le parois ou écorces de levure Saccharomyces cerevisiae peuvent être conservées pendant de longues périodes en milieu acide (par exemple à pH 3,5) et de préférence au froid (par exemple à 4°C) pour éviter les contaminations microbiennes. A la température ambiante et à pH 3,5, on peut les conserver pendant une dizaine de jours. On peut aussi les congeler sans observer de perte d'activité carboxypeptidasique.

Comme on l'a dit plus haut, les parois ou écorces de levure Saccharomyces cerevisiae peuvent être aussi utilisées sous forme incluse dans un gel approprié, tel qu'un gel d'alginate. Ceci est avantageux notamment lorsque le procédé de l'invention est mis en oeuvre en continu.

Le procédé de l'invention peut être mis en oeuvre dans une gamme de pH allant de 4,0 à 8,0, de préférence de 5,5 à 6,5.

La température de réaction ne doit pas être trop élevée afin de ne pas dénaturer les enzymes, ni trop faible, car les temps de réaction sont alors très longs et on peut assister à un phénomène de contamination microbienne.

On aura recours habituellement à des températures de 20 à 70°C, de préférence de 40 à 60°C et, si l'on veut éviter la contamination du produit par des microorganismes mésophiles (les plus courants qui se développent autour de 40°C), on aura avantage à opérer entre 50 et 60°C. De plus, ces températures relativement élevées permettent d'utiliser des quantités de parois ou d'écorces moindres ou de nécessiter des temps de traitement plus courts.

La concentration des peptides amers n'a pas de minimum. Son maximum est essentiellement fonction de la solubilité des peptides à traiter. Habituellement, on utilisera une concentration d'environ 50 à 100 g de peptides par litre, de préférence d'environ 40 g/l.

La proportion de parois ou écorces de levure Saccharomyces cerevisiae à utiliser dépend, bien entendu, de l'activité carboxypeptidasique de celle-ci. A titre indicatif, on pourra utiliser une proportion de parois ou écorces donnant de 20000 à 120000 Unités enzymatiques par kg de peptides à traiter.

La durée d'élimination de l'amertume peut aller, à titre indicatif, de 1 à 20 heures environ.

Le procédé de l'invention permet de traiter tous les types d'hydrolysats de protéines (peptides) amers. A titre d'exemple, on peut traiter notamment les peptides amers dérivant de la caséine, des protéines du lactosérum, des protéines du soja ou de la gélatine, et des protéines du sang.

Il est à noter que les parois ou écorces de levure Saccharomyces cerevisiae utilisées dans la présente invention ne sont pas équivalentes à la levure entière elle-même. L'emploi de cette dernière, à la place des parois ou écorces, ne donne pas de bons résultats car l'on assiste, d'une part, à une diffusion de substances (acides nucléiques notamment) de la levure vers le milieu à traiter, et, d'autre part, à des réactions enzymatiques parasites (notamment l'isomérisation d'acides aminés).

Les exemples non limitatifs suivants sont donnés en vue d'illustrer l'invention.

Dans ces exemples, on a utilisé soit une crème de parois de levure ayant une activité de 0,2 U/mg de matière sèche, soit des billes de gel d'alginate incluant des parois de levure et ayant une activité de 0,15 U/mg de matière sèche. Ces bille avaient été préparées selon le mode opératoire suivant:

A 100 g d'une solution d'alginate de sodium à 4 %, on ajoute 50 g de crème de parois de levures concentrée à 25% de matière sèche par centrifugation, puis la préparation obtenue est ajoutée goutte à goutte dans une solution de chlorure de calcium 100 mM. C'est cette dernière opération qui permet la formation des billes insolubles.

Afin de renforcer la structure des billes et d'éviter aux parois de diffuser vers l'extérieur, on met les billes obtenues en contact avec une solution de gélatine à 5%, puis on pratique une réticulation à l'aide d'une solution de glutaraldéhyde à 1 %.

Les billes obtenues ont une teneur en extrait sec d'environ 12 % en poids et une masse volumique apparente d'environ 1,25 g/cm$^3$.

Les Exemples 1 à 10 illustrent plus particulièrement l'emploi de parois ou écorces de levure sous forme de crème. Le mode opératoire général suivant a été suivi dans ces exemples.

On met en contact la solution de peptides à traiter avec de la crème de parois de levures et on maintient la préparation sous agitation afin de l'homogénéiser. La température est maintenue constante pendant tout le traitement.

Lorsque le traitement visant à éliminer l'amertume est terminé, les écorces de levures sont extraites du milieu soit par centrifugation, soit par microfiltration et on récupère la solution de peptides débarrassés de leur goût amer.

EXEMPLE 1

On prépare une solution à 5 % de peptides amers de caséine par action combinée de trypsine et de chymotrypsine de façon classique. Le pH est ajusté à 6,0 à l'aide d'acide chlorhydrique, puis on met en contact 1 litre de cette solution avec 100 ml de crème de parois de levures à 10 % d'extrait sec (soit 200 g de parois sèches par kg de peptides).

La préparation est maintenue à 60°C.

L'élimination de l'amertume est constatée au bout de 4 heures.

EXEMPLE 2

On prépare une solution à 5 % de peptides amers de caséine par action combinée de trypsine et de chymotrypsine. Le pH est ajusté à 6,0 à l'aide d'acide chlorhydrique puis on met en contact 1 litre de cette solution avec 3 00 ml de crème de parois de levures à 10 % d'extrait sec (soit 600 g de parois sèches pour 1 kg de peptides).

La préparation est maintenue à 60°C.

L'élimination de l'amertume est constatée au bout d'une heure.

EXEMPLE 3

On prépare une solution à 5 % de peptides amers de caséine par action combinée de trypsine et de chymotrypsine. Le pH est ajusté à 6,0 à l'aide d'acide chlorhydrique puis on met en contact 1 litre de cette solution avec 100 ml de crème de parois de levures à 10% d'extrait sec (soit 200 g de parois sèches pour 1 kg de peptides).

La préparation est maintenue à 45°C.

L'élimination de l'amertume est constatée au bout de 12 heures.

EXEMPLE 4

On prépare une solution à 5 % de peptides amers de caséine par action combinée de trypsine et de chymotrypsine. Le pH est ajusté à 6,0 à l'aide d'acide chlorhydrique puis on met en contact 1 litre de cette solution avec 100 ml de crème de parois de levures à 10 % d'extrait sec (soit 200 g de parois sèches pour 1 kg de peptides).

La préparation est maintenue à 55°C.

L'élimination de l'amertume est constatée au bout de 8 heures.

EXEMPLE 5

On prépare une solution à 5 % de peptides amers de caséine par action combinée de trypsine et de chymotrypsine. Le pH est ajusté à 4,5 à l'aide d'acide chlorhydrique puis on met en contact 1 litre de cette solution avec 300 ml de crème de parois de levures à 10% d'extrait sec (soit 600 g de parois sèches pour 1 kg de peptides).

La préparation est maintenue à 40°C.

L'élimination de l'amertume est constatée au bout de 6 heures.

EXEMPLE 6

On prépare une solution à 5 % de peptides amers de caséine par action combinée de trypsine et de chymotrypsine. Le pH est ajusté à 7,5 à l'aide de soude puis on met en contact 1 litre de cette solution avec 300 ml de crème de parois de levures à 10 % d'extrait sec (soit 600 g de parois sèches pour 1 kg de peptides).

La préparation est maintenue à 40°C.

L'élimination de l'amertume est constatée au bout de 20 heures.

EXEMPLE 7

On prépare une solution à 5 % de peptides amers de caséine par action combinée de trypsine et de chymotrypsine. Le pH est ajusté à 6,0 à l'aide d'acide chlorhydrique puis on met en contact 1 litre de cette solution avec 300 ml de crème de parois de levure à 10 % d'extrait sec (soit 600 g de parois sèches pour 1 kg de peptides).

La préparation est maintenue à 40°C.

L'élimination de l'amertume est constatée au bout de 5 heures.

EXEMPLE 8

On prépare une solution à 5 % de peptides amers par action combinée de trypsine et de chymotrypsine sur des protéines de lactosérum purifiées à 80% par ultrafiltration. Le pH est ajusté à 6,0 à l'aide d'acide chlorhydrique, puis on met en contact 1 litre de cette solution avec 100 ml de crème de parois de levures à 10% d'extrait sec (soit 200 g de parois sèches pour 1 kg de peptides).

La préparation est maintenue à 60°C.

L'élimination de l'amertume est constatée au bout de 3 heures.

### EXEMPLE 9

On prépare une solution à 10% de peptides amers par action cominée de trypsine et de chymotrypsine sur des protéines de lactosérum purifiées à 80% par ultrafiltration. Le pH est ajusté à 6,0 à l'aide d'acide chlorhydrique puis on met en contact 1 litre de cette solution avec 50 ml de crème parois de levures à 10% d'extrait sec (100 g de parois sèches pour 1 kg de peptides).

La préparation est maintenue à 60°C.

L'élimination de l'amertume est constatée au bout de 7,5 heures.

### EXEMPLE 10

Des peptides de soja sont préparés de la façon suivante: une solution à 2% de protéines de soja dans de l'eau est ajustée à pH 1,5 à l'aide d'acide chlorhydrique puis on ajoute de la pepsine et on maintient la préparation à 40°C pendant 15 heures. L'hydrolysat est ensuite filtré et on ajuste le pH du filtrat à 4,5 à l'aide de soude.

On met en contact 1 litre de la préparation amère de peptides obtenue avec 100 ml crème de parois de levures à 10% d'extrait sec et on maintient la température à 40°C.

L'élimination de l'amertume est constatée au bout de 10 heures.

Les Exemples 11 à 13 illustrent plus particulièrement l'emploi de parois ou écorces de levure incluses dans un gel d'alginate préparé comme décrit plus haut.

### EXEMPLE 11

On prépare une solution à 5 % de peptides amers par action combinée de trypsine et de chymotrypsine sur de la caséine. Le pH est ajusté à 6,0 à l'aide d'acide chlorhydrique.

On met en contact 1 litre de cette solution avec 150 ml de billes d'alginate contenant les parois de levures et on maintient la préparation à 45°C en agitant légèrement pour maintenir les billes en suspension dans la solution sans les détériorer.

L'élimination de l'amertume est constatée au bout de 15 heures.

### EXEMPLE 12

On place 150 ml de billes d'alginate contenant les parois de levures dans un réacteur plat en verre à double paroi dont les dimensions internes sont les suivantes: diamètre 7,5 cm, hauteur 3,5 cm. Les billes sont maintenues à l'intérieur du réacteur par des tamis en acier inoxydable et forment un lit fixe.

On prépare une solution à 5% de peptides amers de caséine par action combinée de trypsine et de chymotrypsine. Le pH est ajusté à 6,0 à l'aide d'acide chlorhydrique.

Le réacteur étant maintenu à 45°C par circulation d'eau dans la chemise, on fait recirculer 1 litre de préparation de peptides en circuit fermé sur le lit fixe de billes à un débit de 500 ml par heure.

L'élimination de l'amertume est constatée au bout de 15 heures.

### EXEMPLE 13

On place 300 ml de billes d'alginate contenant des parois de levures dans un réacteur constitué d'une colonne en verre à double paroi dont les dimensions internes sont les suivantes: diamètre 4,5 cm, hauteur 20 cm. Les billes sont maintenues à l'intérieur du réacteur par des tamis en acier inoxydable et forment un lit fixe.

On prépare une solution à 5 % de peptides amers de caséine par action combinée de trypsine et de chymotrypsine. Le pH est ajusté à 6,0 à l'aide d'acide chlorhydrique.

Le réacteur étant maintenu à 45°C par circulation d'eau dans la chemise, on alimente le lit fixe de billes avec la préparation de peptides à raison d'un débit continu de 10 ml par heure.

Il faut attendre environ 20 heures avant de pouvoir collecter en continu les peptides débarrassés de leur amertume (temps de lavage du réacteur). Le réacteur a fonctionné pendant 3 jours et il n'a pas été observé de perte de performances sur cette période.

## Revendications

1. Un procédé pour éliminer l'amertume de peptides obtenus par hydrolyse de matières protéinées selon lequel on fair réagir une carboxypeptidase avec les peptides amers pendant un temps suffisant pour éliminer l'amertume de ceux-ci, caractérisé en ce qu'on utilise comme source de carboxypeptidase des parois ou écorces de la levure Saccharomyces cerevisiae ou une matière contenant de telle parois ou écorces; et en ce que, finalement, on sépare lesdites parois ou écorces de levure des peptides débarrassés de leur amertume et on recueille ces derniers.

2. Un procédé selon la revendication 1, caractérisé en ce que la réaction est conduite à un pH de 4,0 à 8,0.

3. Un procédé selon la revendication 2, caractérisé en ce que le pH est de 5,5 à 6,5.

4. Un procédé selon l'une quelconque des revendications 1 à 3, caractérisé en ce que la réaction est conduite à une température de 20 à 70°C.

5. Un procédé selon la revendication 4, caractérisé en ce que la température va de 40 à 60°C.

6. Un procédé selon la revendication 5, caractérisé en ce que la température va de 50 à 60°C.

7. Un procédé selon l'une quelconque des revendications 1 à 6 , caractérisé en ce que la concentration de peptides à traiter est d'environ 50 à 100 g par litre.

8. Un procédé selon l'une quelconque des revendications 1 à 7, caractérisé en ce qu'on utilise une proportion de parois ou d'écorces de levure fournissant 20000 à 120000 Unités carboxypeptidasiques par kg de peptides à traiter.

9. Un procédé selon l'une quelconque des revendications 1 à 8, caractérisé en ce que la durée de la réaction est comprise entre 1 heure et 20 heures.

10. Un procédé selon l'une quelconque des revendications 1 à 9, caractérisé en ce que les parois ou écorces de levure sont incluses dans un gel.

6

Office européen
des brevets

**RAPPORT DE RECHERCHE EUROPEENNE**

Numero de la demande

EP 89 40 0022

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 536 171 (L.A. HALL et al.)<br>* Revendication 1 *<br>--- | 1-5 | A 23 J 3/00<br>A 23 L 1/015 |
| X | GB-A- 509 495 (C. WEIZMANN)<br>* Revendications 1,3,4; exemples I,II,III *<br>----- | 1-6 | |

**DOMAINES TECHNIQUES RECHERCHES (Int. Cl.4)**

A 23 J
A 23 L

**Le présent rapport a été établi pour toutes les revendications**

| Lieu de la recherche | Date d'achèvement de la recherche | Examinateur |
|---|---|---|
| LA HAYE | 14-04-1989 | PEETERS J.C. |